# EUROPEAN PATENT SPECIFICATION

(11) **EP 1 732 750 B1**
(45) Date of publication and mention of the grant of the patent: **21.05.2008**
(21) Application number: 05751675.9
(22) Date of filing: 23.03.2005
(51) Int. Cl.: B29D 11/00, B29C 33/20

(54) **METHOD FOR PRODUCING CONTACT LENSES**
VERFAHREN ZUR HERSTELLUNG VON KONTAKTLINSEN
PROCEDE DE PRODUCTION DE VERRES DE CONTACT

(30) Priority: 24.03.2004 US 555859 P
(43) Date of publication of application: 20.12.2006
(73) Proprietor: Novartis AG, 4056 Basel (CH)
(72) Inventor: MATSUZAWA, Yasuo, Roswell, GA 30076 (US); RUSSELL, Todd Aldridge, Grayson, GA 30017 (US)
(74) Representative: Heinen, Detlef
(86) International application number: PCT/EP2005/003111
(87) International publication number: WO 2005/090060

(56) References cited:
- EP-A- 0 227 365
- EP-A- 0 367 513
- EP-A- 0 686 490
- EP-A- 0 811 475
- WO-A-00/18568
- WO-A-01/15888
- WO-A-87/04390
- WO-A-98/19854
- US-A- 4 786 444
- US-A- 4 931 228
- US-A- 5 894 002
- US-A- 5 935 492
- US-A- 6 012 471
- US-A1- 2002 145 211
- US-A1- 2003 160 343
- US-B1- 6 558 584

## Description

The present invention is related to an improved method for producing contact lenses.

### BACKGROUND OF THE INVENTION

Contact lenses can be manufactured economically in large numbers by a conventional full-mold process involving disposable molds, the examples of which are disclosed in, for example, PCT patent application no. WO/87/04390, in EP-A 0 367 513 or in U.S. Patent No. 5,894,002. In a conventional molding process, a predetermined amount of a polymerizable or crosslinkable material typically is introduced into a disposable mold comprising a female (concave) mold half and a male (convex) mold half. The female and male mold halves cooperate with each other to form a mold cavity having a desired geometry for a contact lens. Normally, a surplus of polymerizable or crosslinkable material is used so that when the male and female halves of the mold are closed, the excess amount of the material is expelled out into an overflow area adjacent to the mold cavity. The polymerizable or crosslinkable material remaining within the mold is polymerized or cross-linked by means of actinic radiation (e.g., UV irradiation, ionized radiation, microwave irradiation or by means of heating. Both the starting material in the mold cavity and the excess material in the overflow area are thereby hardened. After curing, the lens is removed from the mold.

WO-A-98/19854 and US 2003/160343 describe methods and apparatuses to make contact lenses.

However, when the curing is completed, strong adherence between the mold and the lens occurs. In addition to this adhesion, the male and female mold halves are sealed tight as if a vacuum is created in the mold. In order to remove the lens, both mold halves must be separated first by a mechanical force. Due to the presence seal between the male and female mold halves after curing, an extra force is need to force separation of the mold halves from each other. Such extra force may cause lens damages, such as, fracture, tear etc. and thereby can have adverse impacts on the product yield and lens quality.

Therefore, it would be beneficial to provide an improved process in which minimal force is required to separate mold halves so as to minimize lens damages resulted from the forced separation of mold halves.

### SUMMARY OF THE INVENTION

The invention provide a method for producing contact lenses according to claim 1.

The invention also provides an apparatus for demolding contact lenses from molds, the apparatus comprising: a tempering oven a feeding guide, a mold-opening device, and a mold-pushing device, wherein the feeding guide feeds continuously or on-demand a plurality of closed molds into the mold-opening device, wherein each closed mold includes a first mold half having a first molding surface and a second mold half having a second molding surface, wherein the first and second mold halves are configured to receive each other such that a mold cavity is formed between the first and second molding surfaces, wherein one of the first and second mold halves has a collar that encircles the other mold half to provide a seal between the two mold halves when the mold is closed, wherein each mold contains a molded lens within the mold cavity, wherein the mold-pushing device pushes each mold into the mold-opening device in a lock-in position where the mold-pushing device applies a small force directly onto at least one area of the collar at an angle of less than about 50 degrees relative to the normal direction of the collar in the force-receiving area to cause a slight deformation, thereby breaking vacuum seal between the first and second mold halves so that the mold-opening device is capable of separating the first and second mold halves from each other with a reduced force, according to claim 8.

The present invention provides the foregoing and other features, and the advantages of the invention will become further apparent from the following detailed description of the presently preferred embodiments, read in conjunction with the accompanying figures. The detailed description and figures are merely illustrative of the invention and do not limit the scope of the invention, which is defined by the appended claims and equivalents thereof.

### BRIEF DESCRIPTION OF THE DRAWINGS

FIG. 1 is a cross-sectional view of a mold according to a preferred embodiment of the invention.
FIG. 2 illustrates schematically a process of decreasing separation force required for separating the male and female mold halves of a lens-forming mold according to a preferred embodiment of the invention.
FIG. 3a schematically illustrates an apparatus for performing a method of the invention.
FIG. 3b schematically illustrates actions of the mold-opening device of the apparatus shown in FIG. 3a.

### DESCRIPTION OF PREFERRED EMBODIMENTS

Reference now will be made in detail to the embodiments of the invention, one or more examples of which are set forth below. Each example is provided by way of explanation of the invention, not limitation of the invention. In fact, it will be apparent to those skilled in the art that various modifications and variations can be made in the present invention without departing from the scope of the invention. For instance, features illustrated or described as part of one embodiment, can be used on another embodiment to yield a still further embodiment. Thus, it is intended that the present invention cover such modifications and variations as come within the scope of the appended claims and their equivalents. Other objects, features and aspects of the present invention are disclosed in or are obvious from the following detailed description. It is to be understood by one of ordinary skill in the art that the present discussion is a description of exemplary embodiments only, and is not intended as limiting the broader aspects of the present invention.

Unless defined otherwise, all technical and scientific terms used herein have the same meaning as commonly understood by one of ordinary skill in the art to which this invention belongs. Generally, the nomenclature used herein and the laboratory procedures are well known and commonly employed in the art. Conventional methods are used for these procedures, such as those provided in the art and various general references. Where a term is provided in the singular, the inventors also contemplate the plural of that term.

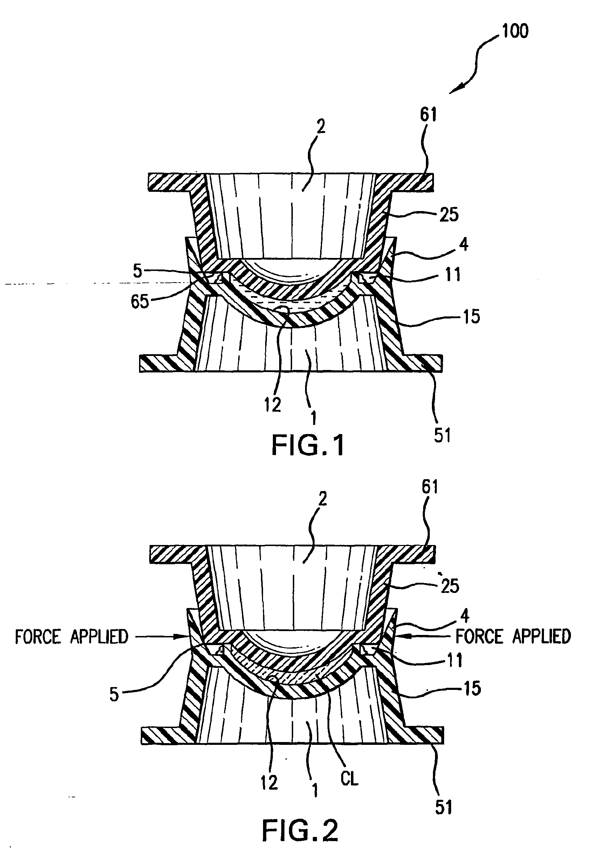

FIGs. **1** schematically illustrates a preferred mold **100** used in the methods and apparatus of the invention. The mold **100** comprises a female mold half **1** and male mold half **2.**

The male mold half **2** comprises a base **61,** a substantially cylindrical body **25** which extends upward from base **61,** a posterior molding surface defining the posterior (concave) surface of a molded contact lens, and an annular shoulder **65** which surrounds the posterior molding surface. The posterior molding surface protrudes outward from the top of body **25.** The annular shoulder **65** shown is flat. It is understood that the annular should **65** can have any suitable surface, such as, e.g., a tilted surface.

The female mold half **1** comprises a base **51,** a substantially cylindrical body **15** which extends upward from base **51,** an anterior molding surface defining the anterior (convex) surface of a molded contact lens, and a collar **4.** The anterior molding surface recesses downward from the top of the body **15.** Collar **4** (or up-protruding flange) is preferably integral part of the female mold half **1** and protrudes upward from the top of the body **15.** A circumferential groove (or recess) **11** is formed on top of the body **15** between the anterior molding surface and functions as an overflow for any excess unpolymerized lens-forming material.

The term "collar" as used herein refers to a peripheral circular part which protrude upward from the top of body of one of the two mating mold halves. A collar can be attached to or preferably integral part of that mold half and which can encircle the other mold half to provide a tight seal between the two mold halves. It is understood that the collar can be provided on either of the male and female mold halves.

The female mold half **1** and a male mold half **2** are configured to receive each other such that a contact lens forming cavity **12** is formed between the anterior and posterior molding surfaces. The collar **4** encircles the body **25** of the male mold half **2** to provide a tight seal **5** between the female and male mold halves when the mold is closed. Typically, there is no lens material in the seal.

Preferably, the male mold half is subjected to corona treatment prior to its use in order for the molded contact lens to adhere preferentially to the male mold half when opening the mold. Such pre-treatment is described in U.S. Patent No. 5,894,002, herein incorporated by reference in its entirety. It will readily be understood by one skilled in the art that, instead of the male mold half **2,** the female mold half **1** can also be pre-treated, which has the result that the contact lens subsequently adheres to the female mold half **1,** and the female mold half **1** with the contact lens located therein then has to be further processed.

In operation, mold halves **1** and **2** can be first injection molded from a plastic resin in an injection molding apparatus, as well known to a person skilled in the art. A specific amount of a polymerizable lens-forming material is typically dispensed into the female mold half **1** by means of a dispensing device and then the male mold half **2** is put on and the mold **100** is closed (FIG. 1). As the mold **100** closes, any excess unpolymerized lens-forming material is pressed into an overflow **11** provided on the female mold half **1.**

Subsequently, the closed mold **100** containing the polymerizable lens-forming material is subjected to actinic irradiation (e.g., UV radiation), at least in the region of the lens forming cavity **12.** For this purpose, at least one of the mold halves is transparent to the actinic radiation (e.g., UV light) at least in the region of the molding surface. Thus, at least the polymerizable lens-forming material in the lens forming cavity **12** is polymerized. It is also possible for any polymerizable lens-forming material in the overflow **11** to be polymerized. This is advantageous in the respect that, when the mold is opened, the excess polymerized lens-forming material then remains in the overflow **11** of the female mold half **1,** while the contact lens adhering to the male mold half **2** can be removed and further processed together with male mold half **2.**

Before being opened, the mold together with the contact lens **CL** inside it is placed while still closed in a tempering oven for tempering and is tempered for a time at a temperature of approximately 120°C, whereby any stresses in the material are relieved and the polymerization is finally completed.

Subsequently, a small force can be applied directly onto at least one area of the collar **4** of the female mold half at an angle of less than about 50 degrees, preferably less than about 40 degress, more preferably less than about 30 degrees, even more preferably less than about 10 degrees, most preferably less than about 5 degrees (i.e., in a direction substantially normal to the collar) relative to the normal direction of the collar in the force-receiving area to break the seal between the mold halves, as shown in FIG. 2. The lens-forming cavity **12** is sealed with the collar **4** of the female mold half **1** and the male mold half **1.** Typically, there is no lens material in the seal. A small amount of force can distort the collar **4** of the female mold half **1** and then the seal can be easily broken. Various ways of applying a small force to the collar **14** can be performed. For example, a small force is applied to two opposite small areas on the collar **14** at an angle of less than about 5 degrees (i.e., in a direction substantially normal to the collar) relative to the normal direction of the collar in each force-receiving area by any mechanical means known to a person skilled in the art. Alternatively, a small force can be applied to one small area on one side of the collar **14** at an angle of less than about 5 degrees (i.e., in a direction substantially normal to the collar) relative to the normal direction of the collar in each force-receiving area, while holding the mold in position (e.g., a locking position) or while stopped by a stopper located on one side opposite to the side onto which the small force is applied directly, by any mechanical means known to a person skilled in the art. By breaking the seal between the two mold halves of a mold before opening the mold, any vacuum effect, which is generated during polymerization of the polymerizable lens-forming material in the mold, can be released and therefore the force required to open the mold can be decreased. As such, lens damages occurred during mold opening can be minimized.

After breaking the seal between the mold halves, the mold is opened, the molded contact lens **CL** adhering to the male mold half **2,** while excess lens-forming material, on the other hand, remains in the overflow **11** of the female mold half **1.**

The molded contact lens **CL** adhering to the male mold half **2** is then passed to a hydration device where the contact lens **CL** is detached from the male mold half **2** and hydrated. Any hydration device can be used in the invention.

In another aspect, the invention provides an apparatus for demolding contact lenses from molds, according to claim 1, the apparatus comprising: a feeding guide, a mold-opening device, and a mold-pushing device, wherein the feeding guide feeds continuously or on-demand a plurality of closed molds into the mold-opening device, wherein each closed mold includes a first mold half having a first molding surface and a second mold half having a second molding surface, wherein the first and second mold halves are configured to receive each other such that a mold cavity is formed between the first and second molding surfaces, wherein one of the first and second mold halves has a collar that encircles the other mold half to provide a seal between the two mold halves when the mold is closed, wherein each mold contains a molded lens within the mold cavity, wherein the mold-pushing device pushes each mold into the mold-opening device in a lock-in position where the mold-pushing device applies a small force directly onto at least one area of the collar at an angle of less than about 50 degrees, preferably less than about 40 degress, more preferably less than about 30 degrees, even more preferably less than about 10 degrees, most preferably less than about 5 degrees (i.e., in a direction substantially normal to the collar) relative to the normal direction of the collar in the force-receiving area to cause a slight deformation, thereby breaking vacuum seal between the first and second mold halves so that the mold-opening device is capable of separating the first and second mold halves from each other with a reduced force. As used herein, the term "a reduced force" is intended to describe that a force required to open an mold after breaking the seal between the two mold halves of the mold before opening the mold is smaller than a force required to open an mold without breaking the seal between the two mold halves of the mold before opening the mold. A person skilled in that art knows well how to determine a force required to open a mold.

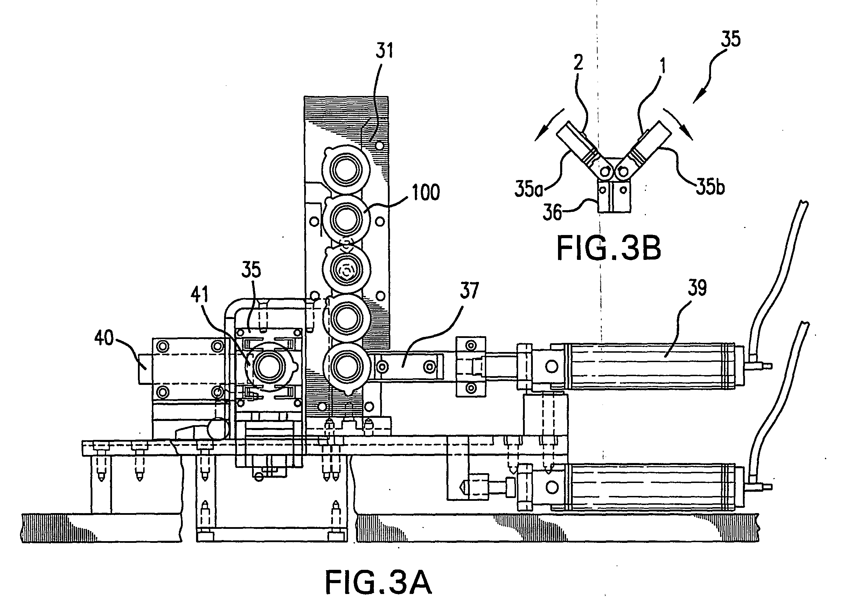

FIG. 3a schematically illustrate a preferred apparatus for performing a method of the invention. Such apparatus can be implemented in a lens production environment, especially in an automatic product process. Each closed mold **100** (shown in Figures 1-2) with a molded lens **CL** therein is loaded into a feeding guide **31** in which molds drop one by one to the bottom of the feeding guide **31.** A sharp edge pusher (or blade) **37** pushes each mold into a jaw assembly (or mold-opening device) **35** in a proper position or lock-in position (i.e., sliding into the jaws and stopped by a stopper **40).** The stopper preferably has a sharp edge **41** which is in contact with a small area of the collar of each closed mold **100** at an angle normal to the collar in the small area. It is understood that the stopper **40** and/or pusher **37** can have any non-sharp edge. Once the mold is in proper position, the sharp edge pusher (or blade) **37** applies a small force directly onto, for example, a small side area, opposite to the stopper **40,** of the collar of each closed mold at an angle of less than about 5 degrees relative to the normal direction of the collar in the force-receiving area to cause a slight deformation of the collar, thereby breaking the "vacuum" seal between the male half **1** and female mold half **2.** The pusher **37** is driven by a cylinder **39** (e.g., air cylinder). The force applied to the mold assembly can be adjusted via cylinder stroke, stopper position, and/or cylinder line pressure. After the seal is broken, no force or minimal force is needed to separate the male and female mold halves. The male and female mold halves are separated by the mold opening device **35** (FIG. 3b). Preferably, the mold opening device **35** includes a first part **35a** and a second part **35b,** each part having holding means (e.g., jaws, slots, or the like) for holding one of the mold halves and being pivotally coupled to a support **36** so that the first and second parts **35a** and **35b** can move pivotally in a synchronized manner to separate the mold halves **1** and **2** as shown in FIG. 3b. After mold opening, the molded contact lens **CL** preferably adhering to the male mold half **2** is then passed to a hydration device where the contact lens **CL** is detached from the male mold half **2** and hydrated in a hydration device (not shown).

Feeding guide shown in Figure 3 is installed vertically. As used herein, the term "vertically" is intended to describe that the feeding guide is at a right angle (90 degrees) related to the production floor. Under gravity, each mold will drop, preferably one by one, to the bottom of the feeding guide. However, the feeding guide can also installed at any other desired angles (to the production floor), for example, such as, 30 degrees, 45 degrees or 60 degrees, instead of 90 degrees shown in Figure 3. The feeding guide can also be installed horizontally (in relation to the production floor). Under this circumstance, the feeding guide can have a transporting means known to a person skilled in the art for transporting each closed mold into a mold-opening device.

It is also understood that the mold-opening device can have any configurations known to a person skilled in the art for performing the function of separating two mold halves from each other.

It is further understood that methods of manufacturing mold halves for cast molding a contact lens are generally well known to those of ordinary skill in the art. The process of the present invention is not limited to any particular method of forming a mold half. In fact, any method of forming a mold half can be used in the present invention. However, for illustrative purposes, the above discussion has been provided as one embodiment of forming mold halves that can be used in accordance with the present invention.

A "polymerizable lens-forming material" refers to a material which can be polymerized and/or crosslinked by actinic radiation to form a contact lens. A lens-forming material can be any materials known to a skilled artisan. For example, a polymerizable lens-forming material can be a fluid composition (i.e., a solution or a solvent-free liquid or melt at a temperature below 60°C) comprising one or more prepolymers, one or more monomers, one or more macromers, or combinations thereof. A lens-forming material can further include other components, such as a photoinitiator, a visibility tinting agent, UV-blocking agent, photosensitizers, and the like. Preferably, a polymerizable lens-forming material used in the present invention can form a hydrogel material.

A "hydrogel material" refers to a polymeric material which can absorb at least 10 percent by weight of water when it is fully hydrated. Generally, a hydrogel material is obtained by polymerization or copolymerization of at least one hydrophilic monomer in the presence of or in the absence of additional monomers and/or macromers. Exemplary hydrogels include, but are not limited to, poly(vinyl alcohol) (PVA), modified polyvinylalcohol (e.g., as nelfilcon A), poly(hydroxyethyl methacrylate), poly(vinyl pyrrolidone), PVAs with polycarboxylic acids (e.g., carbopol), polyethylene glycol, polyacrylamide, polymethacrylamide, silicone-containing hydrogels, polyurethane, polyurea, and the like. A hydrogel can be prepared according to any methods known to a person skilled in the art.

Various embodiments are evident. Although one mold (FIG. 1) is illustrated, the invention is in no way limited to this specific mold. A person skilled in the art can readily determine other molds for which the invention has applicability.

## Claims

1. A method for producing contact lenses, comprising:
(a) providing a mold including a first mold half having a first molding surface and a second mold half having a second molding surface, wherein the first and second mold halves are configured to receive each other such that a mold cavity is formed between the first and second molding surfaces, wherein one of the first and second mold halves has a collar that encircles the other mold half to provide a seal between the two mold halves when the mold is closed;
(b) dispensing a specific amount of a polymerizable lens-forming material into one of the mold halves; mating the mold halves to close the mold;
(c) polymerizing said polymerizable material located between the two mold halves, thereby forming a molded contact lens;
(d) tempering the closed mold with the molded contact lens therein in a tempering oven;
(e) applying a small force directly to at least one area of the collar at an angle of less than about 50 degrees relative to the normal direction of the collar in the force-receiving area to distort the collar, thereby breaking the seal between the two mold halves; and
(f) opening the mold.

2. The method of claim 1, wherein the small force is applied directly to at least one area of the collar at an angle of less than about 30 degrees relative to the normal direction of the collar in the force-receiving area.

3. The method of claim 1, wherein the small force is applied to two opposite small areas on the collar at an angle of less than about 50 degrees relative to the normal direction of the collar in each force receiving area.

4. The method of claim 1, comprising pre-treating the first or second molding surface to render the molded contact lens preferentially adhered to the pre-treated molding surface when opening the mold.

5. The method of claim 4, wherein the pre-treated molding surface is the molding surface of the second mold half which is a male mold half.

6. The method of claim 1, wherein the small force is applied directly to one small area on one side of the collar while the mold being held in a locking position or while being stopped by a stopper located on one side opposite to the side onto which the small force is applied directly.

7. The method of claim 6, wherein the small force is applied directly to the small area at an angle of less than about 30 degrees relative to the normal direction of the collar in the force-receiving small area.

8. An apparatus for demolding contact lenses from molds in a method according to claim 1, the apparatus comprising:
a tempering oven arranged to receive the closed moulds with the moulded contact lenses therein before opening of the mould,
a feeding guide (31),
a mold-opening device (35), and
a mold-pushing device (37),
wherein the feeding guide feeds continuously or on-demand a plurality of closed molds, one by one, into the mold-opening device, wherein each closed mold includes a first mold half having a first molding surface and a second mold half having a second molding surface, wherein the first and second mold halves are configured to receive each other such that a mold cavity is formed between the first and second molding surfaces, wherein one of the first and second mold halves has a collar that encircles the other mold half to provide a seal between the two mold halves when the mold is closed, wherein each mold contains a molded lens within the mold cavity, wherein the mold-pushing device pushes each mold into the mold-opening device in a lock-in or stop position where the mold-pushing device applies a small force directly onto an area of the collar at an angle of less than about 50 degrees relative to the normal direction of the collar in the force-receiving area to cause a slight deformation, thereby breaking vacuum seal between the first and second mold halves so that the mold-opening device is capable of separating the first and second mold halves from each other with a reduced force.

9. The apparatus of claim 8, wherein the mold-pushing device is capable of applying a small force directly to at least one area of the collar at an angle of less than about 30 degrees relative to the normal direction of the collar in the force-receiving area.

10. The apparatus of claim 8, wherein the small force applied to the mold in step (e) of the method according to claim 1 is adjusted via cylinder stroke, stopper position, and/or cylinder line pressure.

## Patentansprüche

1. Verfahren zur Herstellung von Kontaklinsen, umfassend:
(a) Bereitstellen einer Form enthaltend eine erste Formhälfte mit einer ersten Formoberfläche und einer zweiten Formhälfte mit einer zweiten Formoberfläche, wobei die erste und zweite Formhälfte so ausgeformt sind, dass sie einander so aufnehmen, dass zwischen der ersten und zweiten Formoberfläche ein Formzwischenraum gebildet wird,
wobei eine der beiden Formhälften einen Kragen umfasst, die die andere Formhälfte umschliesst, um eine Dichtung zwischen den beiden Formhälften zu bilden wenn die Form geschlossen ist;
(b) Einfüllen einer bestimmten Menge eines polymerisierbaren Linsenmaterials in eine der Formhälften; Zusammensetzen der Formhälften zum Schliessen der Form;
(c) Polymerisieren des polymerisierbaren Materials zwischen den beiden Formhälften, wodurch eine geformte Kontaktlinse gebildet wird;
(d) Tempern der geschlossenen Form mit der darin geformten Kontaktlinse in einem Temperofen;
(e) Ausüben einer kleinen Kraft direkt auf mindestens einen Bereich des Kragens in einem Winkel kleiner als etwa 50 Grad relativ zur Normalen des Kragens im kraftaufnehmenden Bereich, um den Kragen zu verformen, wodurch die Dichtung zwischen den beiden Formhälften aufgebrochen wird; und
(f) Öffnen der Form.

2. Verfahren gemäss Anspruch 1, wobei die kleine Kraft direkt auf mindestens einen Bereich der Hülse in einem Winkel kleiner als etwa 30 Grad relativ zur Normalen des Kragens im kraftaufnehmenden Bereich ausgeübt wird.

3. Verfahren gemäss Anspruch 1, wobei die kleine Kraft direkt auf zwei gegenüberliegende Bereiche der Hülse in einem Winkel kleiner als etwa 50 Grad relativ zur Normalen des Kragens in jedem der kraftaufnehmenden Bereiche ausgeübt wird.

4. Verfahren gemäss Anspruch 1, umfassend Vorbehandlung der ersten oder zweiten Formoberfläche, damit die geformte Kontaktlinse beim Öffnen der Form vorzugsweise an der vorbehandelten Oberfläche anhaftet.

5. Verfahren gemäss Anspruch 4, bei welchem die vorbehandelte Formoberfläche die Formoberfläche der zweiten Formhälfte ist, die eine männliche Formhälfte ist.

6. Verfahren gemäss Anspruch 1, worin die kleine Kraft direkt auf einen kleinen Bereich auf einer Seite des Kragens ausgeübt wird, während die Form in einer festen Position gehalten wird oder von einem Gegenhalter gestützt wird, der auf der Seite, auf die die kleine Kraft direkt ausgeübt wird, gegenüberliegenden Seite angeordnet ist.

7. Verfahren gemäss Anspruch 6, wobei die kleine Kraft direkt auf den kleinen Bereich der Hülse in einem Winkel kleiner als etwa 30 Grad relativ zur Normalen des Kragens im kraftaufnehmenden Bereich ausgeübt wird.

8. Vorrichtung zum Entformen von Kontaktlinsen aus Formen in einem Verfahren gemäss Anspruch 1, wobei die Vorrichtung umfasst:
einen Temperofen, der so angeordnet ist, dass er die geschlossenen Formen mit den geformten Kontaktlinsen darin vor dem Öffnen der Form aufnehmen kann,
eine Zuführung (31),
eine Formöffnungsvorrichtung (35) , und
eine Formschiebevorrichtung (37),
wobei die Zuführung kontinuierlich oder auf Anforderung eine Vielzahl von geschlossenen Formen einzeln der Formöffnungsvorrichtung zuführt, wobei jede geschlossene Form eine erste Formhälfte mit einer ersten Formoberfläche und eine zweite Formhälfte mit einer zweiten Formoberfläche umfasst, wobei die erste und zweite Formhälfte so ausgebildet sind, dass sie einander so aufnehmen, dass zwischen der ersten und zweiten Formoberfläche ein Formzwischenraum gebildet wird, wobei eine der beiden Formhälften einen Kragen umfasst, der die andere Formhälfte umschliesst, um eine Dichtung zwischen den beiden Formhälften zu bilden, wenn die Form geschlossen ist, wobei jede Form im Formzwischenraum eine geformte Kontaktlinse enthält, wobei die Formschiebevorrichtung jede Form in die Formöffnungsvorrichtung in eine Feststell- oder Halteposition befördert, in welcher die Formschiebevorrichtung eine kleine Kraft direkt auf mindestens einen Bereich des Kragens in einem Winkel kleiner als etwa 50 Grad relativ zur Normalen des Kragens im kraftaufnehmenden Bereich ausübt um den Kragen zu verformen, wodurch die Vakuum-Dichtung zwischen der ersten und zweiten Formhälfte aufgebrochen wird, so dass die Formöffnungsvorrichtung in der Lage ist, die erste und zweite Formhälfte mit reduzierter Kraft voneinander zu trennen.

9. Vorrichtung gemäss Anspruch 8, bei welcher die Formschiebevorrichtung in der Lage ist eine kleine Kraft direkt auf mindestens einen Bereich des Kragens in einem Winkel kleiner als etwa 30 Grad relativ zur Normalen des Kragens im kraftaufnehmenden Bereich auszuüben.

10. Vorrichtung gemäss Anspruch 8, bei welcher die kleine Kraft, die auf die Form in Schritt (e) ausgeübt wird, durch Zylinderhub, Gegenhalterposition und/oder Zylinderdruck eingestellt wird.

## Revendications

1. Procédé de production de lentilles de contact, comprenant les étapes consistant à :
(a) fournir un moule comprenant une première moitié de moule ayant une première surface de moulage et une seconde moitié de moule ayant une seconde surface de moulage, dans lequel la première moitié de moule et la seconde moitié de moule sont configurées pour se recevoir l'une dans l'autre de sorte qu'une cavité de moulage soit formée entre la première surface de moulage et la seconde surface de moulage, dans lequel l'une de la première moitié de moule et de la seconde moitié de moule a un collier qui encercle l'autre moitié de moule pour fournir un joint entre les deux moitiés de moule lorsque le moule est fermé ;
(b) alimenter une quantité spécifique d'une matière de formation de lentille polymérisable dans l'une des moitiés de moule ; accoupler les moitiés de moule pour fermer le moule ;
(c) polymériser ladite matière polymérisable située entre les deux moitiés de moule, ce qui forme une lentille de contact moulée ;
(d) cuire le moule fermé avec la lentille de contact moulée à l'intérieur de celui-ci dans un four de cuisson ;
(e) appliquer une petite force directement sur au moins une zone du collier à un angle inférieur à environ 50 degrés par rapport à la direction normale du collier dans la zone de réception de force pour déformer le collier, ce qui casse le joint entre les deux moitiés de moule ; et
(f) ouvrir le moule.

2. Procédé selon la revendication 1, dans lequel la petite force est appliquée directement sur au moins une zone du collier à un angle inférieur à environ 30 degrés par rapport à la direction normale du collier dans la zone de réception de force.

3. Procédé selon la revendication 1, dans lequel la petite force est appliquée directement sur deux petites zones opposées du collier à un angle inférieur à environ 50 degrés par rapport à la direction normale du collier dans chaque zone de réception de force.

4. Procédé selon la revendication 1, comprenant l'étape consistant à prétraiter la première ou seconde surface de moulage pour faire en sorte que la lentille de contact moulée adhère de préférence à la surface de moulage prétraitée en ouvrant le moule.

5. Procédé selon la revendication 4, dans lequel la surface de moulage prétraitée est la surface de moulage de la seconde moitié de moule qui est une moitié de moule mâle.

6. Procédé selon la revendication 1, dans lequel la petite force est appliquée directement sur une petite zone d'un côté du collier pendant que le moule est maintenu dans une position de verrouillage ou pendant qu'il est arrêté par une butée située sur un côté opposé au côté sur lequel la petite force est appliquée directement.

7. Procédé selon la revendication 6, dans lequel la petite force est appliquée directement sur la petite zone à un angle inférieur à 30 degrés par rapport à la direction normale du collier dans la petite zone de réception de force.

8. Appareil de démoulage de lentilles de contact de moules dans un procédé selon la revendication 1, l'appareil comprenant :
un four de cuisson agencé pour recevoir les moules fermés avec les lentilles de contact moulées à l'intérieur de ceux-ci avant d'ouvrir le moule,
un guide d'alimentation (31),
un dispositif d'ouverture de moule (35), et
un dispositif de poussage de moule (37),
dans lequel le guide d'alimentation alimente continuellement ou à la demande une pluralité de moules fermés, l'un après l'autre, dans le dispositif d'ouverture de moule, dans lequel chaque moule fermé comprend une première moitié de moule ayant une première surface de moulage et une seconde moitié de moule ayant une seconde surface de moulage, dans lequel la première moitié de moule et la seconde moitié de moule sont configurées pour se recevoir l'une dans l'autre de sorte qu'une cavité de moule est formée entre la première surface de moulage et la seconde surface de moulage, dans lequel l'une de la première moitié de moule et de la seconde moitié de moule a un collier qui encercle l'autre moitié de moule pour fournir un joint entre les deux moitiés de moule lorsque le moule est fermé, dans lequel chaque moule contient une lentille moulée à l'intérieur de la cavité de moule, dans lequel le dispositif de poussage de moule pousse chaque moule dans le dispositif d'ouverture de moule à une position de verrouillage ou d'arrêt à laquelle le dispositif de poussage de moule applique une petite force directement sur une zone du collier à un angle inférieur à environ 50 degrés par rapport à la direction normale du collier dans la zone de réception de force pour provoquer une légère déformation, ce qui casse le joint sous vide entre la première moitié de moule et la seconde moitié de moule de sorte que le dispositif d'ouverture de moule soit capable de séparer la première moitié de moule et la seconde moitié de moule l'une de l'autre avec une force réduite.

9. Appareil selon la revendication 8, dans lequel le dispositif de poussage de moule est capable d'appliquer une petite force directement sur au moins une zone du collier à un angle inférieur à environ 30 degrés par rapport à la direction normale du collier dans la zone de réception de force.

10. Appareil selon la revendication 8, dans lequel la petite force appliquée au moule à l'étape (e) du procédé selon la revendication 1 est ajustée par l'intermédiaire d'une course de cylindre, d'une position de butée et/ou d'une pression de ligne de cylindre.
